Europäisches Patentamt

European Patent Office

Office européen des brevets

(19)

(11) **EP 1 320 213 A1**

(12) **EUROPEAN PATENT APPLICATION**
published in accordance with Art. 158(3) EPC

(43) Date of publication:
**18.06.2003 Bulletin 2003/25**

(51) Int Cl.⁷: **H04L 7/00**, H04L 12/28,
G06F 1/04, G06F 13/00

(21) Application number: **02747669.6**

(22) Date of filing: **15.07.2002**

(86) International application number:
**PCT/JP02/07169**

(87) International publication number:
**WO 03/010915 (06.02.2003 Gazette 2003/06)**

(84) Designated Contracting States:
**AT BE BG CH CY CZ DE DK EE ES FI FR GB GR
IE IT LI LU MC NL PT SE SK TR**

(30) Priority: **25.07.2001 JP 2001224983**

(71) Applicant: **Sony Corporation
Tokyo 141-0001 (JP)**

(72) Inventor: **FUJINAMI, Yasushi,
c/o SONY CORPORATION
Tokyo 141-0001 (JP)**

(74) Representative: **DeVile, Jonathan Mark, Dr. et al
D. Young & Co
21 New Fetter Lane
London EC4A 1DA (GB)**

(54) **NETWORK SYSTEM AND OUPUT DEVICE USED IN THIS SYSTEM**

(57)     The present invention is directed to a network system where plural equipments are connected to network, which comprises a clock source (2) for transmitting clocks and for transmitting time information every predetermined time to a group of sync equipments such as speakers (5) and a display (6), etc. which are connected to a network (1), a contents source (4) for offering contents to the group of sync equipments through the network, and a controller (3) for offering, to the contents source (4), delay time based on network delay when contents data is sent to the group of sync equipments and decode delay at the group of sync equipments in reproducing contents to realize synchronization of clock and phase between sync equipments connected to the network..

FIG.1

**Description**

Technical Field

The present invention relates to a network system provided with plural equipments, an output equipment used in the network system and a synchronization method for network system, and specifically relates to a network system which carries out synchronization in plural equipments connected to network.

Background Art

In recent years, communication networks such as Internet, etc. have been popularized in enterprises, schools and homes, and attempts to deliver or distribute contents of audio data and/or video data by making use of such communication network have been made. It is conceivable that such attempts are further developed to replace wiring for audio/video data within home by communication network.

Replacement of wiring for audio/video data within home by communication network means that, e. g., DVD (Digital Versatile Disk) player, display and/or speaker, etc. are connected to communication network. For example, when DVD is reproduced, moving picture and voice (sound) are respectively outputted from the display and the speaker through digital communication network.

In the present communication network, there is the problem that delivered or distributed timing is not guaranteed in data flowing thereon. Namely, since transmission delay is not fixed in the present network by input/output phase relationship (before and after relationship in point of time) between plural input/output equipments, there is no assurance that output is carried out by sufficiently small phase error. Moreover, in the case where connection is made through digital communication network, absolute value of delay becomes great as compared to analog connection. In such case, in the above-described example, times when contents transmitted from DVD arrive at display and plural speakers existing are varied. When this is reproduced as it is, reproduction is carried out at different or diverse timings as the result thereof.

Namely, this leads to the fact that synchronization of output signal which has been realized in the case where connection is made by analog cable cannot be attained. There exist a large number of merits based on realization of network. However, if output phases between display and speaker or between speakers and input phase between microphone and camera cannot be in correspondence with each other, it becomes difficult to replace wiring for audio/video data within home by digital communication network.

Disclosure of the Invention

An object of the present invention is to provide a novel network system, an output equipment used in network system, and a synchronization method for network which can solve technical problems as described above.

Another object of the present invention is to synchronize clock and to allow input/output phases to be in correspondence with each other between respective equipments connected to network.

The present invention proposed in order to attain objects as described above is directed to a network system where plural equipments are connected to network, which comprises: clock delivery or distribution means for delivering or distributing clocks and for delivering or distributing time information to the plural equipments; clock adjustment means for adjusting clocks in respective equipments on the basis of the clocks and the time information which have been delivered or distributed; and delay correction means for implementing delay correction to the plural equipments in consideration of network delay taking place when communication of stream is carried out on the network and conversion delay taking place when the plural equipments carry out conversion relating to stream.

A network system to which the present invention is applied comprises: a clock source for transmitting clocks to a group of sync equipments connected to network; a contents source for offering contents to this group of sync equipments through the network; and a controller for offering, to the contents source, a delay time based on network delay when contents data is sent to the group of sync equipments and decode delay in the group of sync equipments in reproducing contents.

Here, the clock source transmits time information to the group of sync equipments every predetermined time, thereby making it possible to synchronize clock as the premise of phase adjustment.

The contents source prepares delay information message based on delay time offered from the controller to deliver or distribute the delay information message to the group of sync equipments in a manner accompanied with contents data, whereby the group of respective sync equipments start decode operation in consideration of own decode delays to permit reproduction timings between the group of sync equipments to be in correspondence with each other.

The present invention is directed to an output equipment connected to network and serving to decode contents data offered through this network, which comprises: clock reproducing means for reproducing clock on the basis of a reference time signal received through the network; and stream reproducing means for implementing necessary delay to the contents data received through the network to decode the contents data thus obtained to output.

Here, the output equipment further comprises clock oscillating means for oscillating clock used therein, wherein the clock reproducing means compares a received reference time signal and value of output from the clock oscillating means to adjust oscillating frequency of the clock oscillating means, thereby making it possible to reproduce clock.

The present invention is directed to a synchronization method for network for taking synchronization of input or output by plural equipments connected to network, which comprises: delivering or distributing time information along with clock to the plural equipments; operating a common clock device by the plural equipments on the basis of the clock and the time information which have been delivered or distributed; using, for the plural equipments, input timing or output timing using time of the clock device in consideration of network delay and conversion delay such as decode delay or encode delay at the plural equipments, etc.; and starting conversions in the respective equipments on the basis of the input timing or the output timing which has been used and the conversion delays at the respective equipments.

The present invention is applied to sync equipments connected to network. Namely, a synchronization method for a network system in the present invention comprises: receiving time information through network along with clock; adjusting clock on the basis of the clock and the time information which have been received; receiving, along with contents data, information indicating time at which reproduction of the contents data is stalled; determining start timing of decode operation on the basis of delay taking place in decoding the contents data on the basis of the received information; and starting decode operation by the determined start timing to reproduce the contents data.

Still further objects of the present invention and practical merits obtained by the present invention will become more apparent from the description of the embodiments which will be given below with reference to the attached drawings.

Brief Description of the Drawings

FIG. 1 is a view showing the entire configuration of a network system to which the present invention is applied.
FIG. 2 is a view showing a first configuration example in clock source.
FIG. 3 is a view showing a second configuration example in clock source.
FIG. 4 is a view for explaining the configuration of controller shown in FIG. 1.
FIG. 5 is a view for explaining the configuration of contents source shown in FIG. 1.
FIG. 6 is a view for explaining the configuration of speaker shown in FIG. 1.
FIG. 7 is a view for explaining the configuration of display shown in FIG. 1.
FIG. 8 is a view for explaining the operation of clock source in clock delivery or distribution.
FIG. 9 is a flowchart for explaining time adjustment processing in clock reproduction.
FIG. 10 is a flowchart indicating processing immediately after respective equipments are connected to network.
FIG. 11 is a flowchart indicating processing immediately after respective equipments are connected to network.
FIG. 12 is a view showing the structure of equipment data base.
FIG. 13 is a view showing the content of equipment data base placed in RAM of controller.
FIG. 14 is a view showing outline of decoder system in conformity with MPEG2 system (ISO 13818-1).
FIG. 15 is a view showing an example of data format delivered to MPEG decoder.
FIG. 16 is a view showing the relationship between SCR and PTSV (PTSvideo) and the relationship between SCR and PTSA (PTSaudio).
FIG. 17 is a view for explaining delay used in the present invention.
FIG. 18 is a view for explaining delay in the case where maximum value of position compensation delay is taken into consideration.

Best Mode for Carrying Out the Invention

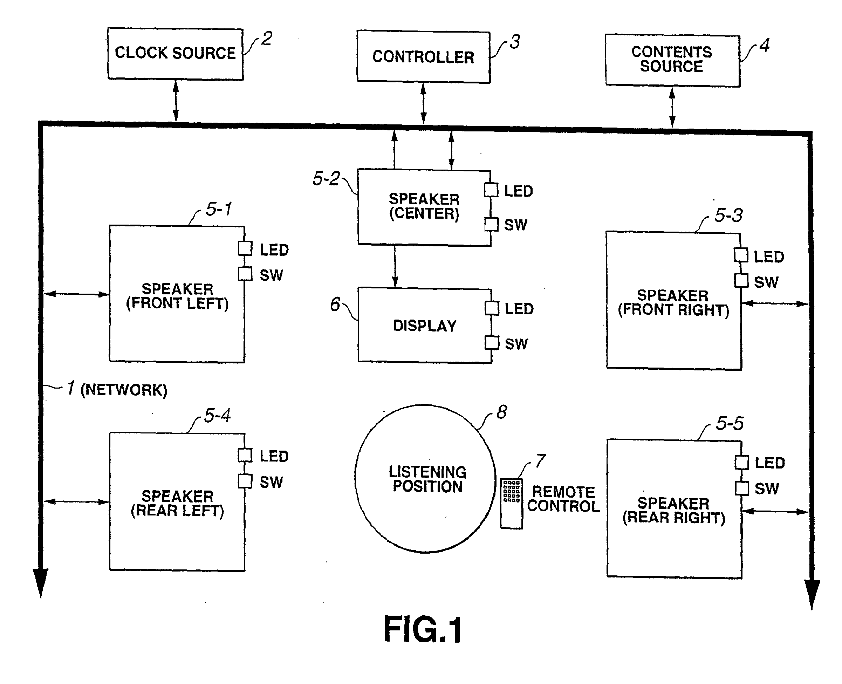

Explanation will now be given in detail with reference to the attached drawings in connection with the embodiments of the present invention.
A network system to which the present invention is applied has a configuration as shown in FIG. 1, wherein respective equipments included in FIG. 1 are mutually connected by network 1. Listening position 8 indicates, in a model form, existing position of user in this network system although it is notspecific equipment. User can carry out instruction with respect to the network system by using a remote control 7 for operation at the listening position 8.
Respective input/output equipments of a clock source 2 which delivers clock to the system, a controller 3 which controls the entirety of the system, a contents source 4 which sends out contents data (signal), five speakers 5 (5-1 $\sim$ 5-5) which deliver audio signals to user, and a display 6 which delivers a video signal to user are connected to the network 1. Here, the display 6 and the speakers 5 can be called a group of (contents) sync equipments with respect to the contents source 4. Moreover, the respective speakers 5 are installed (provided) at positions as shown in FIG. 1, i.e., respective positions of front left (5-1), center (5-2), front right (5-3), rear left (5-4) and rear right (5-5). The respective speakers 5 and the display 6 respectively comprise LEDs and push-switches SW, thus making it possible to obtain influence on user using LEDs and response from user by push-switches SW.

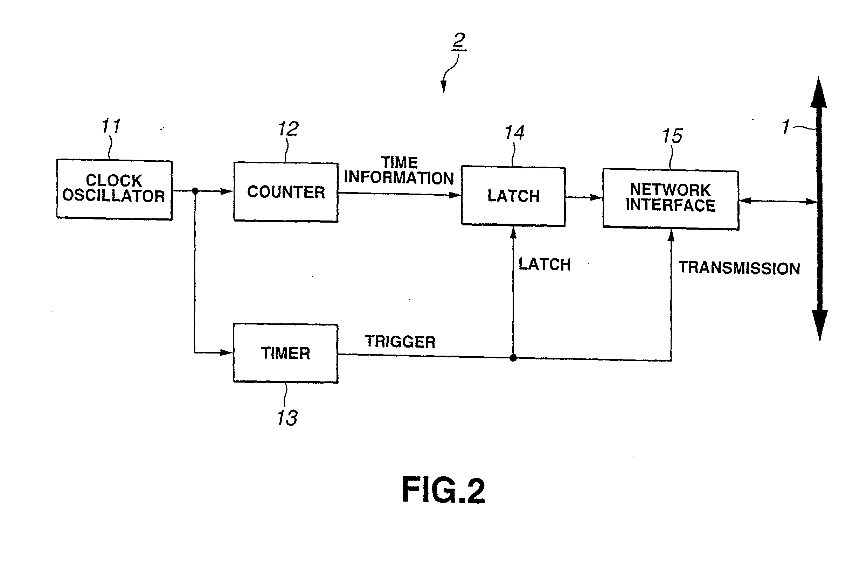

FIG. 2 is a view showing a first configuration example in the clock source 2. The clock source 2 shown in FIG. 2 comprises a clock oscillator 11, a counter 12, a timer 13, a latch 14 and a network interface 15, and is connected to the network 1 through this network 15. Output of the clock oscillator 11 is inputted to the counter 12 and the timer 13. Output (time signal) of the counter 12 is inputted to the latch 14. Moreover, output of the latch 14 is inputted to the network interface 15. Further, output (trigger signal) of the timer 13 is inputted to a latch signal terminal of the latch 14 and a transmit signal terminal of the network interface 15. The clock source 2 transmits clock to equipments mutually connected by the network 1 by using such configuration.

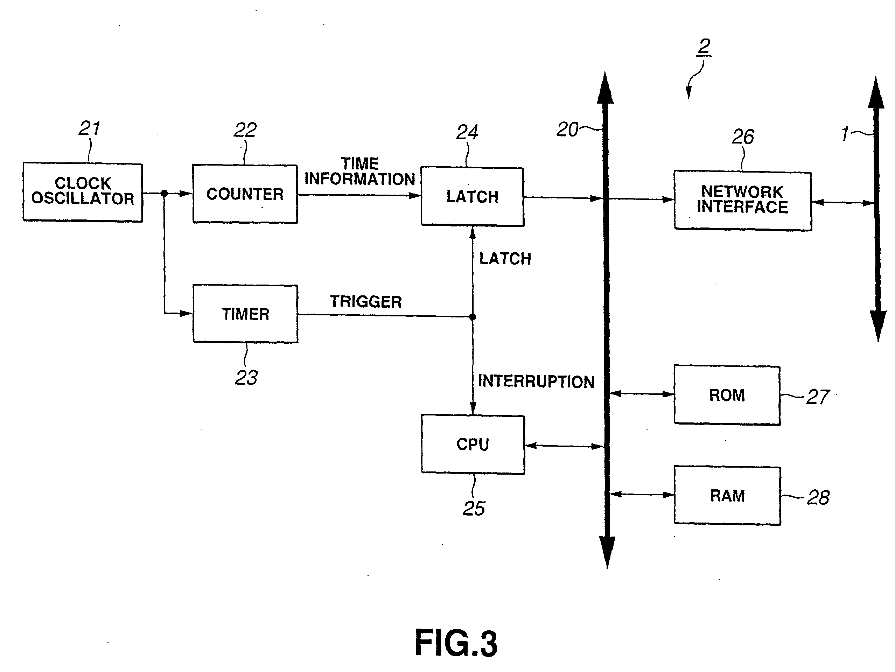

FIG. 3 is a view showing a second configuration example in the clock source 2. The clock source 2 shown in FIG. 3 comprises a clock oscillator 21, a counter 22, a timer 23 and a latch 24. Moreover, the clock source 2 comprises a CPU 25 as a control unit, a ROM 27 and a RAM 28, and is connected to the network 1 through a network interface 26. The CPU 25, the ROM 27 and the RAM 28 constitute a microcomputer mutually connected by a system bus 20. The network interface 26 is connected to the system bus 20. Output of the clock oscillator 21 is inputted to the counter 22 and the timer 23. Output (time signal) of the counter 22 is inputted to the latch 24. Output of the latch 24 is connected to the system bus 20. Output (trigger signal) of the timer 23 is inputted to a latch signal terminal of the latch 24 and an interruption terminal of the CPU 25. The clock source 2 transmits clock to equipments mutually connected by the network 1 by using such a configuration.

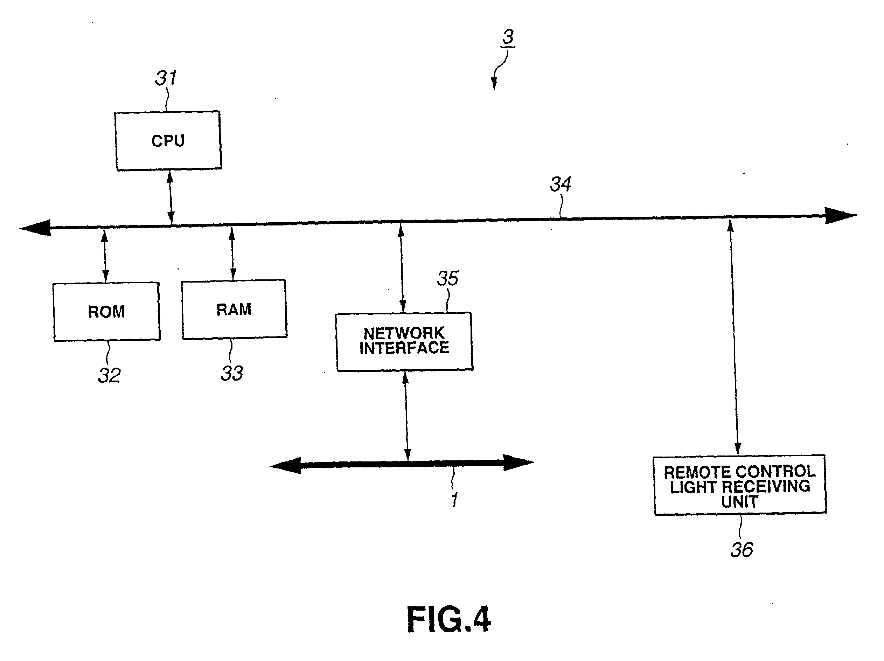

FIG. 4 is a view for explaining the configuration of the controller 3 shown in FIG. 1. The controller 3 constituting the present invention comprises a CPU 31, a ROM 32 and a RAM 33, wherein these circuit components are mutually connected by a system bus 34 to constitute a microcomputer. The controller 3 comprises a network interface 35 connected to the system bus 34, and is connected to the network 1 through this network interface 35. Moreover, the controller 3 includes a remote control light receiving unit 36, and the remote control light receiving unit 36 is connected to the system bus 34. This controller 3 has a role which controls the entirety of the system of FIG. 1, and practical control thereof is setting of configuration of the system, and control of operation (reproduction of contents) of the system, etc. Particularly, in the present invention, setting of delay at the time of contents reproduction is important as function.

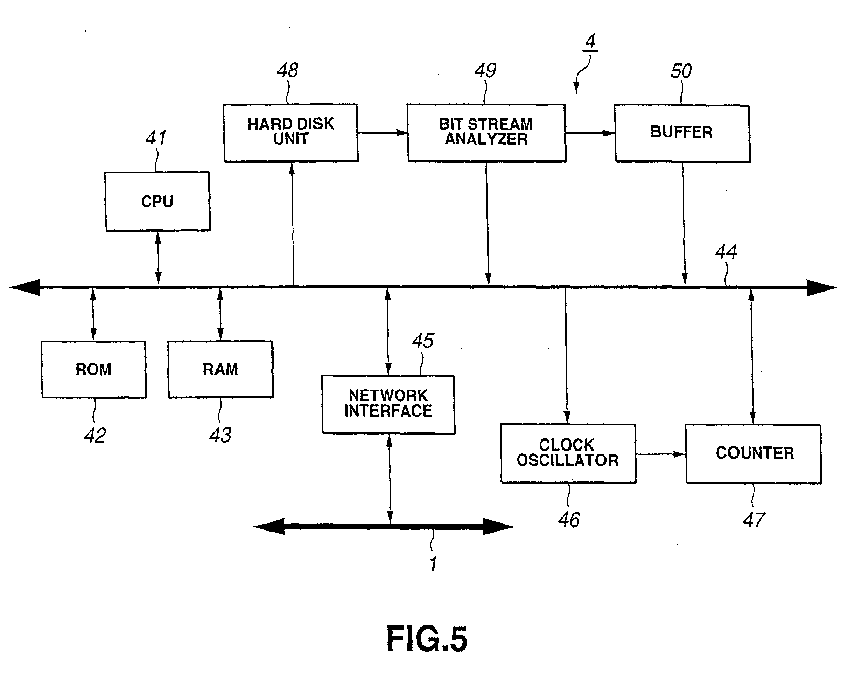

FIG. 5 is a view for explaining the configuration of the contents source 4 shown in FIG. 1. The contents source 4 constituting the present invention delivers contents stream to equipments connected to the network 1 via the network 1. As shown in FIG. 5, the contents source 4 comprises a CPU 41, a ROM 42 and a RAM 43, wherein these circuit components are mutually connected by a system bus 44 to constitute a microcomputer. Moreover, the contents source 4 is connected to the network 1 through a network interface 45. The network interface 45 is connected to the system bus 44.

Further, the contents source 4 constituting the present invention comprises a clock oscillator 46 and a counter 47. Output of the clock oscillator 46 is inputted to the counter 47. The clock oscillator 46 and the counter 47 are connected to the system bus 44. Furthermore, the contents source 4 comprises a hard disk unit 48, a bit stream analyzer 49, and a buffer 50. The hard disk unit 48 inputs contents stream stored therein to the bit stream analyzer 49. Output of the bit stream analyzer 49 is inputted to the buffer 50, and output thereof is delivered to the system bus 44. In addition, the hard disk unit 48 and the bit stream analyzer 49 are connected to the system bus 44.

It is to be noted that since the contents source 4 does not have decoder, value of decode delay has no meaning, but the contents source 4 has 0 as decode delay. This decode delay value is recorded in the ROM 42, and is adapted so that it can be read out from the CPU 41. Moreover, the contents source 4 recognizes classification (kind) of the component itself, and its classification (kind) is "contents source". This classification (kind) is recorded in the ROM 42, and is adapted so that it can be read out from the CPU 41. It is assumed that, as classification (kind) in this embodiment, the display 6 has classification (kind) of "display type", and the respective speakers 5 have classification (kind) of "monaural (monophonic) speaker type". In addition to the above, there are classifications (kinds) of, e.g., "stereo speaker type", "integral type of display + stereo speaker", "super woofer type", and "audio source type", etc.

The contents source 4 has reproduction function of clock therein, and serves to reproduce clock from a reference time signal delivered from the clock source 2. Moreover, the contents source 4 delivers contents stream stored therein under control of the controller 3. At this time, the contents source 4 has a function to add time stamp to stream from delay value designated from the controller 3 and reproduced clock.

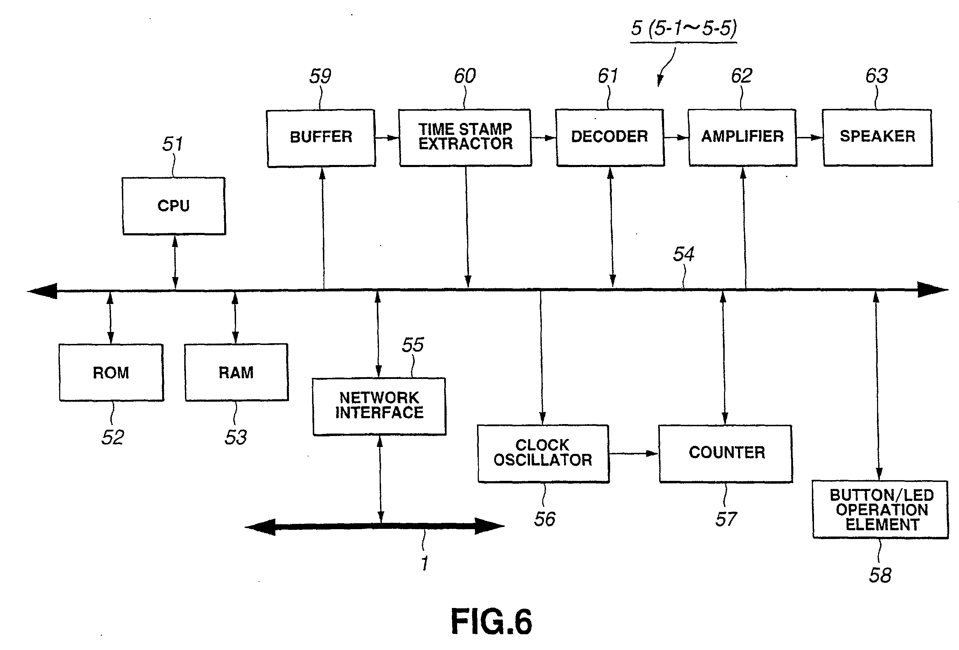

FIG. 6 is a view for explaining the configuration of the speakers 5 (5-1 ～ 5-5) shown in FIG. 1. This configuration shown in FIG. 6 is common with respect to all speakers 5 (5-1 - 5-5) shown in FIG. 1, and these speakers have the same internal structure (and operation). Each speaker 5 comprises a CPU 51, a ROM 52 and a RAM 53, wherein these circuit components are mutually connected by a system bus 54 to constitute a microcomputer. In addition, the speakers 5 are connected to the network I through a network interface 55 connected to the system bus 54.

Each speaker 5 comprises a clock oscillator 56 and a counter 57 which are connected to the system bus 54, and output of this clock oscillator 56 is inputted to the counter 57. Further, each speaker 5 comprises a buffer 59, a time stamp extractor 60, a decoder 61, an amplifier 62 and a speaker 63. Stream data flowing at the speaker 5 is inputted to the decoder 61 via the buffer 59 and the time stamp extractor 60 from the system bus 54, and is decoded thereat. Output of the decoder 61 is converted into audio signal by the speaker 63 via the amplifier 62, and is outputted therefrom. The time stamp extractor 60, the decoder 61 and the amplifier 62 are connected to the system bus 54. The inside of this decoder 61 constitutes MPEG decoder which will be described later. In practical sense, the decoder 61 is composed of demultiplexer, audio buffer and audio decoder.

Each speaker 5 further comprises a button/ LED operation element 58. The CPU 51 can read out, via the stream bus 54, information as to whether or not button of the button/LED operation element 58 is pushed down. In addition, the CPU 51 can control flashing of LED at the button/LED operation element 58 via the system bus 54.

Here, the speaker 5 recognizes decode delay at the decoder 61 that the speaker 5 itself has. Here, decode delay is time from the time when data is inputted to the decoder 61 to the time when decoded data is outputted, and is representative among conversion delays which are various delays. This decode delay value is recorded in the ROM 52, and is adapted so that it can be read from the CPU 51. In addition, the speaker 5 recognizes classification (kind) that the speaker 5 itself has, and classification (kind) of this speaker 5 is "monaural (monophonic) speaker". This classification (kind) is recorded in the ROM 52, and can be read out from the CPU 51.

The operation executed at the speaker 5 is roughly classified into three operations. The three operations are (1) reproduction of clock, (2) user interface adaptation and (3) reproduction of stream. These operations are realized in the state where tasks operative (run) on the CPU 51 and respective necessary components are combined. It is to be noted that these three tasks operative (run) on the CPU 51 are assumed to be independently operated (run) on multi-task operating system operative (running) on the CPU 51.

In the (1) reproduction of clock which is the above-described first operation, clock is reproduced at the inside of the speaker 5 by reference time signal sent from the clock source 2. In the (2) user interface adaptation which is the second operation, there is conducted, e.g., an operation to emit the inside LED by instruction of the controller 3 to send information as to whether or not inside button is pushed down back to the controller 3. In the (3) reproduction of stream which is the third operation, necessary delay is implemented to received contents data, and the contents data thus obtained is decoded and is outputted.

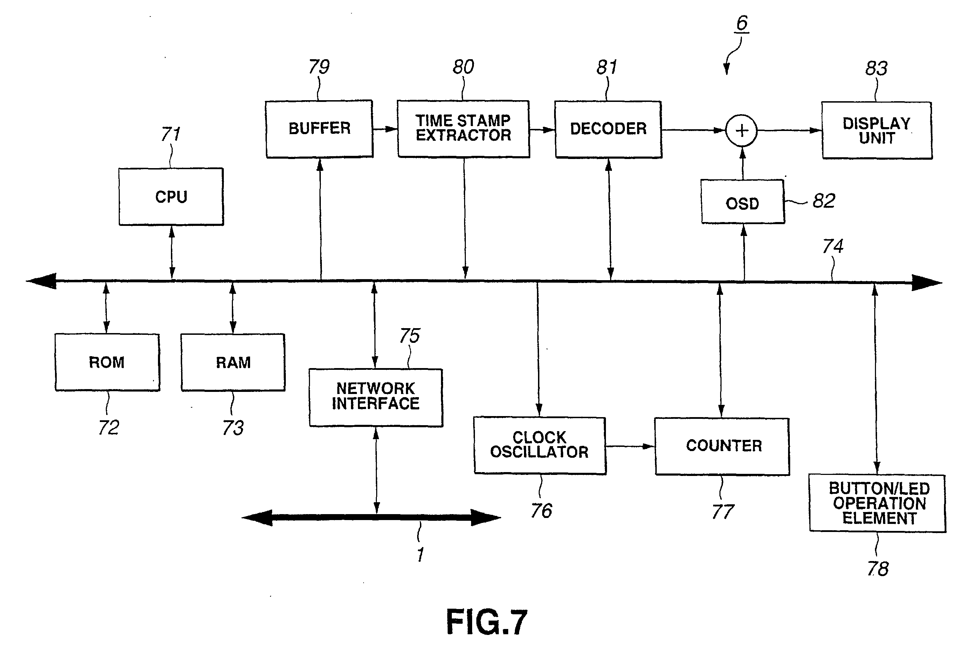

FIG. 7 is a view for explaining the configuration of the display 6 shown in FIG. 1. The internal configuration of this display 6 can be grasped as the configuration in which an OSD (On Screen Display) 82 and a display unit 83 are added to the internal configuration of the speaker 5 which has been explained in FIG. 6. Namely, the display 6 shown in FIG. 7 comprises a CPU 71, a ROM 72 and a RAM 73, wherein these circuit components are mutually connected by a system bus 74 to constitute a microcomputer. In addition, the display 6 is connected to the network 1 through a network interface 75 connected to the system bus 74.

This display 6 comprises a clock oscillator 76 and a counter 77 which are connected to the system bus 74, and output of the clock oscillator 76 is inputted to the counter 77. Further, the display 6 comprises a buffer 79, a time stamp extractor 80, a decoder 81, an OSD 82, and a display unit 83. Stream data flowing at the display 6 is inputted to the decoder 81 via the buffer 79 and the time stamp extractor 80 from the system bus 74, and is decoded thereat. Output from the decoder 81 is mixed with output of the OSD 82, and is then displayed on the display unit 83. The time stamp extractor 80, the decoder 81 and the OSD 82 are connected to the system bus 74. It is to be noted that the inside of the decoder 81 forms the configuration of MPEG decoder which will be described later. In practical sense, the decoder 81 is composed of demultiplexer, video buffer and video decoder.

Moreover, the display 6 comprises a button/ LED operation element 78. The CPU 71 can read out, via the system bus 74, information as to whether or not button is pushed down. Further, the CPU 71 can control flashing of LED via the system bus 74. The display 6 recognizes decode delay at the decoder 81 that the display 6 itself has. Here, decode delay is time from the time when data is inputted to the decoder 81 until decoded data is outputted. This decode delay value is recorded into the ROM 72, and is adapted so that it can be read out from the CPU 71. In addition, the display 6 recognizes classification (kind) that the display 6 itself has. Classification (kind) of the display 6 is "display". There is employed the configuration in which this classification (kind) is recorded in the ROM 72, and is adapted so that it can be read out from the CPU 71.

The operation that the display 6 carries out is roughly classified into three operations. The three operations are the same as the speaker 5, and are (1) reproduction of clock, (2) user interface adaptation and (3) reproduction of stream. These operations are realized in the state where tasks operative (running) on the CPU 71 and respective necessary components are combined. It is to be noted that these three tasks operative (running) on the CPU 71 are assumed to be independently operative (run) on multi-task operating system operative (running) at the CPU 71.

This (1) reproduction of clock is to reproduce clock at the inside of the display 6 by reference time signal sent from the clock source 2. (2) User interface adaptation is to emit the inside LED by, e.g., instruction of the controller 3 to send information as to whether or not inside button is pushed down back to the controller 3. (3) Reproduction of stream is to implement necessary delay to received contents data thereafter to decode such data to output it.

Then, the operation of the entirety of the network system to which this embodiment is applied will be explained. The clock source 2 shown in FIG. 1 transmits clock to equipments mutually connected by the network 1. In more practical sense, time information every predetermined time (reference time signal 'Ts' here) is transmitted. It is to be noted that it is not necessarily required that transmission of this time information is carried out at determined time interval, but such time information may be transmitted every predetermined time. At the receiving side of clock (speakers 5 (5-1 ∼ 5-5), display 6, contents source 4), received reference time information and value of output of the internal oscillating circuit are compared so that oscillating frequency of the internal oscillating circuit is adjusted. Thus, clock is reproduced.

The controller 3 shown in FIG. 1 sets the system configuration. This operation is attained by allowing user to push down switches that the respective speakers 5 have in response to message displayed at the display 6 in accordance with instruction of the controller 3 and/or LEDs that the respective speakers 5 emit in accordance with instruction of the controller 3. Moreover, the controller 3 controls stream reproduction. This operation is carried out by allowing the contents source 4 to output stream in accordance with instruction of the controller 3, and allowing the respective speakers 5 and the display 6 to decode stream. In addition, adjustment of audio outputs of the respective speakers 5 is also carried out by instruction of the controller 3.

Then, clock delivery or distribution that the clock source 2 carries out will be explained. Here, explanation will be given with respect to respective configurations of two kinds shown in FIGS. 2 and 3.

First, the operation of the clock source 2 shown in FIG. 2 will be explained. Here, oscillating frequency of the clock oscillator 11 is assumed to be 'U' [Hz]. Clock oscillated at the clock oscillator 11 is inputted to the counter 12 and the timer 13. The counter 12 increments own counter by inputted clock to generate time information 'T'. Since inputted clock is 'U' [Hz], the time information 'T' is incremented at frequency of 'U' [Hz]. Output (time information 'T') of the counter 12 is inputted to the latch 14. The latch 14 latches input signal when latch signal is inputted to output it. In the case where the latch signal is not inputted, a signal latched immediately before is held.

The timer 13 counts inputted clock to output trigger signals every set value 'S' set in advance. Here, since input clock to the timer 13 is 'U'[Hz], trigger signals are outputted every 'S/U' [sec.]. In other words, period of the trigger signal becomes 'S/U'[sec.], and frequency of the trigger signal becomes 'U/S'[Hz]. The trigger signal outputted from the timer 13 is inputted to the latch signal terminal of the latch 14, and is inputted to the transmit signal terminal of the network interface 15 at the same time.

At the time point when a trigger signal from the timer 13 is inputted to the latch signal terminal, the latch 14 holds a time signal 'T' inputted from the counter 12 to output it. Output of the latch 14 is not changed until next latch signal is inputted. This value is caused to be reference time signal 'Ts'. The network interface 15 which has received trigger signal at the transmit signal terminal reads output signal 'Ts' of the latch 14 which has been inputted to store that output signal into broadcast packet to send out it to the network 1. Since the broadcast packet does not designate destination, that output signal arrives at respective equipments connected to the network 1.

Then, the operation of the clock source 2 shown in FIG. 3 will be explained. Here, oscillating frequency of the clock oscillator 21 is assumed to be 'U' [Hz]. Clock oscillated at the clock oscillator 21 is inputted to the counter 22 and the timer 23. The counter 22 increments own counter by inputted clock to generate time information 'T'. Since inputted clock is 'U'[Hz], the time information 'T' is incremented at frequency of 'U' [Hz]. Output (time information 'T') of the counter 22 is inputted to the latch 24. When a latch signal is inputted, the latch 24 latches input signal to output it. In the case where a latch signal is not inputted, a signal latched immediately before is held.

The timer 23 counts inputted clock to output trigger signals every set value 'S' set in advance. Here, since input clock to the timer 23 is 'U'[Hz], trigger signals are outputted every 'S/U'[sec.]. In other words, period of the trigger signal becomes 'S/U'[sec.], and frequency of the trigger signal becomes 'U/S'[Hz]. The trigger signal outputted from the timer 23 is inputted to the latch signal terminal of the latch 24, and is inputted to the interruption terminal of the CPU 25 at the same time. At the time point when a trigger signal from the timer 23 is inputted to the latch signal terminal, the latch 24 holds a time signal 'T' inputted from the counter 22 to output it. Output of the latch 24 is not changed until next latch signal is inputted. This value is caused to be reference time signal 'Ts'.

The CPU 25 which has received the trigger signal at the interruption terminal reads out value of the latch 24, i.e., reference time signal 'Ts' through the system bus 20. Further, the CPU 25 instructs, via the system bus 20, the network interface 26 to transmit reference time signal 'Ts' which has been read out from the latch 24 to respective equipments connected to the network 1. The network interface 26 stores reference time signal 'Ts' into broadcast packet in accordance with instruction which has been received from the CPU 25 to send out it to the network 1. Since the broadcast packet does not designate destination, the reference time signal 'Ts' arrives at respective equipments connected to the network 1. In this case, the CPU 25 is operative by making use of the RAM 28 by program stored in the ROM 27.

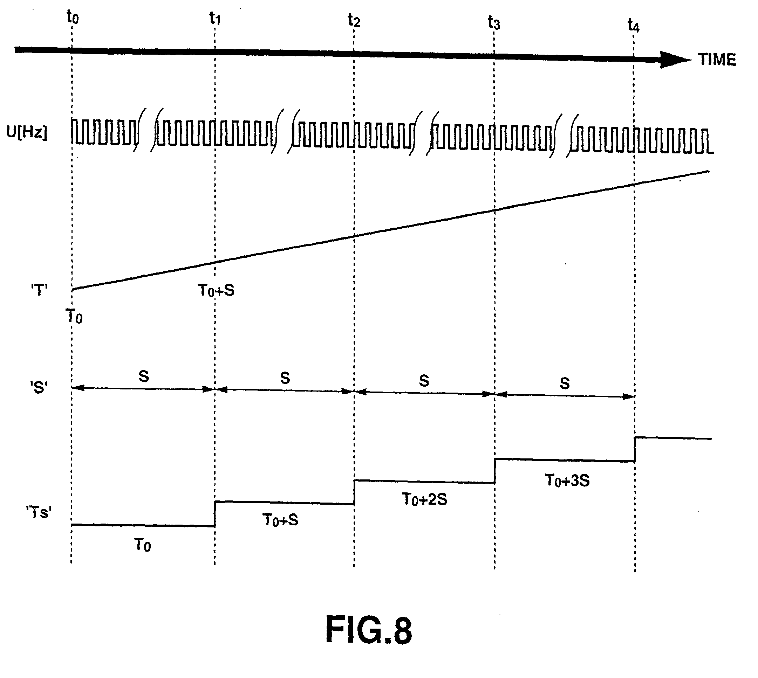

FIG. 8 is a view for explaining the operation of the clock source 2 in the clock delivery or distribution. Here, time is taken at the abscissa, and values of respective signals are assigned to the ordinate. The clock oscillator 11 (or the clock oscillator 21) oscillates at a frequency of 'U'[Hz]. Output of the counter 12 (or the counter 22), i.e., time information 'T' is incremented at the frequency of 'U'[Hz] in the same manner as above. The origin 't0' of the abscissa of FIG. 8 is taken as the time when trigger signal of the timer 13 (or the timer 23) has been outputted, and the time information 'T' at that time point is assumed to be 'T0'.

Next trigger signal is outputted at time 't1' when count operation is carried out by period 'S' at a frequency of clock 'U' from time 't0', and time information 'T' at this time results in 'T0+S'. At this time, at the same time, the time information 'T' is latched by the latch 14 (or the latch 24), and reference time signal 'Ts' results in 'T0+S'. Thereafter, trigger signals are outputted every clock period 'S' at frequency of 'U', and reference time information 'Ts' respectively changes to 'T0+2S', 'T0+3S'. The reference time signal 'Ts' is broadcasted with respect to the network 1 every time trigger signal takes place.

Then, explanation will be given by taking speakers 5 (5-1 ∼ 5-5) as an example in connection with the operation of clock reproduction. This clock reproduction is executed also at the contents source 4 and the display 6. Here, "reproduction of clock" indicates that clock sent from the clock source 2 is generated for a second time within the client equipment.

In the ordinary state, output of the clock oscillator 56 shown in FIG. 6 is inputted to the counter 57, and the counter 57 increments own counter by inputted clock to generate time information 'Tt'. The CPU 51 can read thereinto value (time information 'Tt') of the counter 57 via the bus 54. The time information 'Tt' is read out by the CPU 51, and is used for timing adjustment of decode operation. The clock oscillator 56 is a variable frequency oscillator, and can change oscillating frequency within a predetermined range by allowing the CPU 51 to carry out instruction via the system bus 54. In addition, the CPU 51 can set a desired value at the counter 57 via the system bus 54.

Reference time signals 'Ts' from the clock source 2 are received, e.g., every predetermined time. In this instance, the CPU 51 executes task for clock adjustment which will be explained below. The counter 57 generates time information 'Tt' by free-running clock of the clock oscillator 56. Reference time signal 'Ts' that the clock source 2 has sent is received by the network interface 55 of the speakers 5. The network interface 55 notifies arrival of the reference time signal 'Ts' to the CPU 51. At the CPU 51, clock adjustment task is started by this signal.

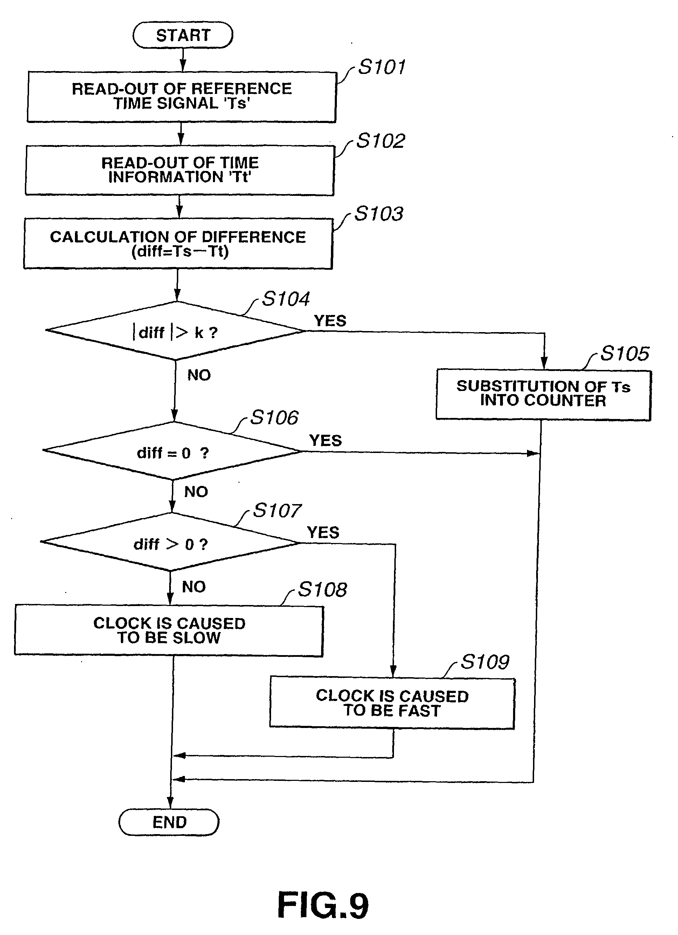

FIG. 9 is a flowchart for explaining clock adjustment processing in the clock reproduction. The CPU 51 first reads out reference time signal 'Ts' which has arrived at the network interface 55 (step 101). Thereafter, the CPU 51 reads out time information 'Tt' from the counter 57 (step 102). Then, the CPU 51 calculates difference between the reference time signal 'Ts' and the time signal 'Tt' to substitute ('Ts' - 'Tt') into variable 'diff' (step 103). The CPU 51 compares absolute value of 'diff' and constant k (step 104). In the case where it is judged that absolute value of 'diff' is greater, value of 'Ts' is substituted into the counter 57 (step 105) to complete processing. In the case where it is not judged at the step 104 that absolute value of 'diff' is greater, processing proceeds to step 106.

At the step 106, the CPU 51 confirms whether or not value of 'diff' is 0 (zero). In the case where value of 'diff' is not equal to 0, processing proceeds to step 107. In the case where value of 'diff' is 0 (zero), processing is completed. At the step 107, the CPU 51 compares value of 'diff' and 0 (zero). In the case where it is judged that value of 'diff' is greater than 0 (zero) ('Ts' > 'Tt'), processing proceeds to step 109. In the case where it is judged that the value is not greater than 0 (zero) ('Ts' < 'Tt'), processing proceeds to step 108. At the step 108, the CPU 51 instructs the clock oscillator 56 to lower oscillating frequency thereafter to complete processing. In addition, at the step 109, the CPU 51 instructs the clock oscillator 56 to raise oscillating frequency thereafter to complete processing.

By the task of the CPU 51 as described above, in the case where difference between received reference time signal 'Ts' and internal time information 'Ts' is great, received reference time signal 'Ts' is substituted into the internal time counter. When internal time information 'Tt' leads a little, clock is caused to be slow. In addition, when internal time information 'Tt' lags a little, clock is caused to be fast. By these operations, it is possible to reproduce internal time information 'Tt' caused to be in correspondence with reference time signal 'Ts'. It is to be noted that while broadcast communication is used in clock delivery or distribution in the above-mentioned example, communication of unicast (one-to-one communication) may be also used.

Then, the operation of the system configuration setting carried out with the controller 3 being as center will be explained.

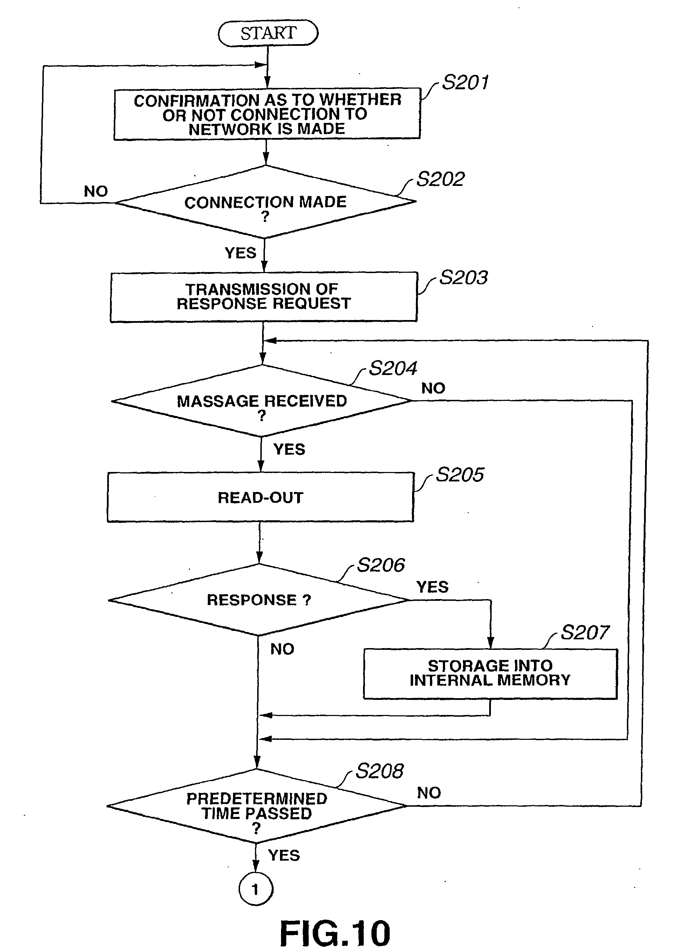

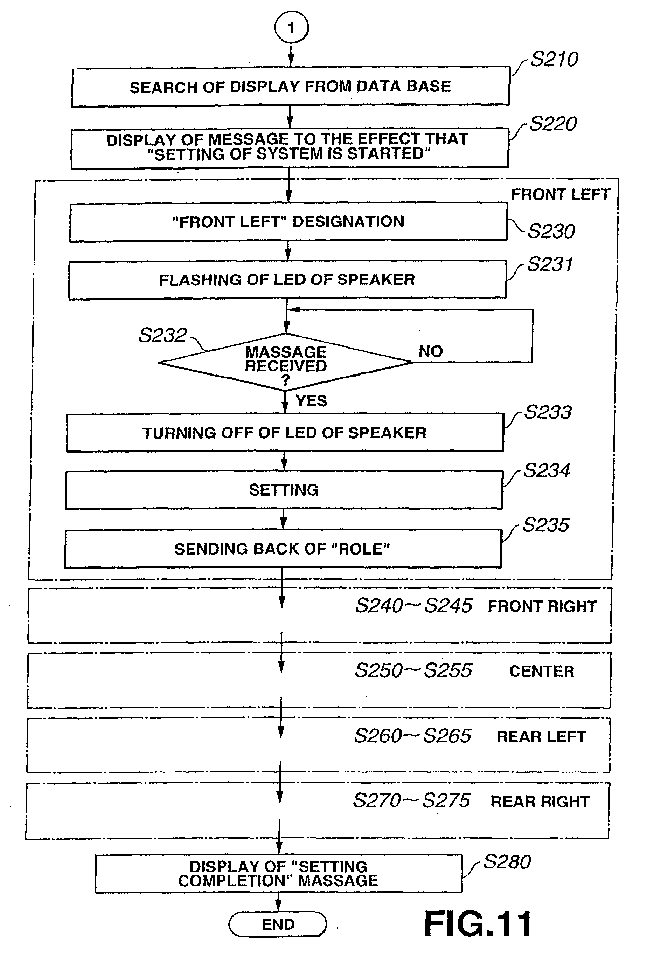

FIGS. 10 and 11 are flowcharts showing processing immediately after respective equipments are connected to the network 1. As shown in FIG. 10, when the controller 3 is physically connected to the network 1 so that power supply is turned ON, it first confirms connection to the network 1. Namely, the CPU 31 of the controller 3 shown in FIG. 4 initially allows the network interface 35 to confirm that connection to the network 1 has been made (step 201). Further, when it is judged that connection to the network I has been made, processing proceeds to step 203. In the case where it is not judged that connection to the network 1 has been made, processing returns to step 201 to repeat confirmation (step 202).

At the step 203, the CPU 31 prepares "response request message" to instruct the network interface 35 to transmit it to the network 1. This "response request message" consists of a predetermined character string. The network interface 35 stores "response request message" into broadcast packet in accordance with the instruction received from the CPU 31 to send out it to the network 1. Since broadcast packet does not designate destination, "response request message" arrives atrespective equipments connected to the network 1. The respective equipments which have received "response request message" answer back classifications (kinds) and decode delay values that the respective equipments themselves have. The classifications (kinds) and decode delay values are recorded in ROMs of the respective equipments. For example, at the speaker 5, this message arrives at the network interface 55, and the CPU 51 decodes this message to read classification (kind) and decode delay from the ROM 52 to prepare "response" message to instruct the network interface 55 to transmit it to the controller 3. The messages that the respective equipments have answered back are received at the network interface 35, and the network interface 35 notifies arrival of message to the CPU 31.

In the case where it is judged at step 204 that message has arrived, processing by the CPU 31 of the controller 3 proceeds to step 205. When it is judged that message has not yet arrived, processing proceeds to step 208. At the step 205, the CPU 31 reads out the message which has arrived at the network interface 35. Thereafter, the CPU 31 confirms whether or not the message which has been read out is a predetermined "response" which has been answered back from each equipment (step 206). In the case where that message is the predetermined "response", processing proceeds to step 207. In the case where that message is not the predetermined "response", processing to step 208.

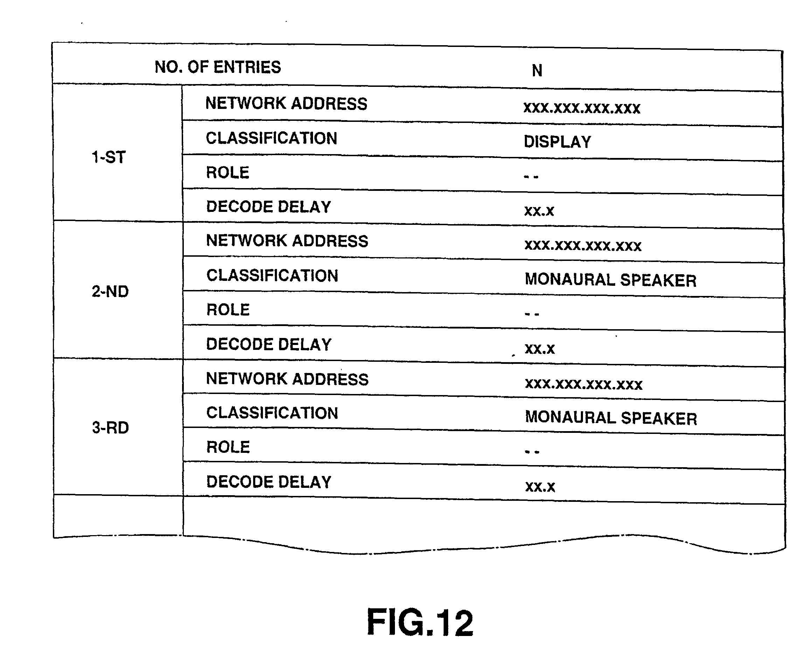

At the step 207, the CPU 31 records received 'response" with respect to equipment data base placed in the RAM 33. FIG. 12 is a view showing the structure of equipment data base. At the leading portion of the equipment data base, the number of registered entries is recorded. Subsequently, records of respective equipments are recorded by the number of entries. At records of the equipments, network addresses for specifying corresponding equipment on the network, classifications (kinds), roles and decode delays are respectively recorded. In recording "response' with respect to the equipment data base, the number of entries is first incremented by 1. Further, new record is added to end of list. Thereafter, network address for specifying equipment of the destination of received "response", classification (kind), and decode delay are recorded with respect to the newly added record. The term of the role is recorded at the latter half of the system configuration setting operation.

At step 208, at the CPU 31, whether or not a predetermined time has been passed after" response request message" of the step 203 is transmitted is judged. In the case where it is judged that the predetermined time has been passed, processing proceeds to step 210 shown in FIG. 11. In the case where it is judged that the predetermined time has not yet been passed, processing returns to the step 204 to repeat operation until now.

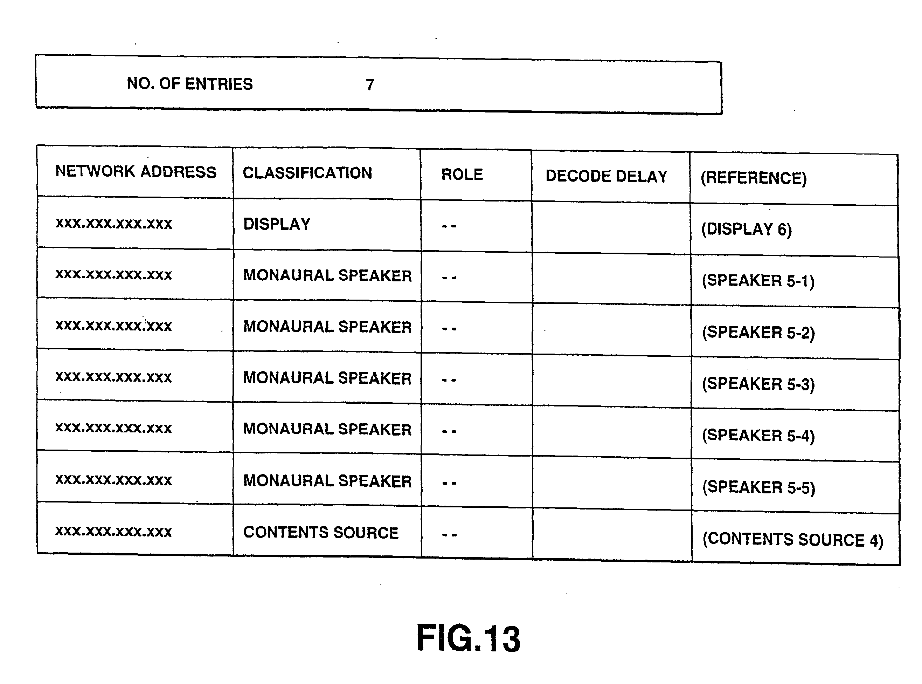

At step 210 shown in FIG. 11, the content of equipment data base placed in the RAM 33 is the content as shown in FIG. 13, and the number of entries thereof is 7. As the item of 7 (seven) records, first, the equipment data base has network address indicating display 6, and record where classification (kind) is display is placed. Moreover, the equipment data base has network addresses indicating respective five speakers 5 (5-1 ~ 5-5), and five records in total where classification (kind) is monaural (monophonic) speaker are placed. Finally, the equipment data base has network address indicating contents source 4, and record where classification (kind) is contents source is placed. It is to be noted that while order of records is indicated as an example, it is not determined that order of records results in the order shown in FIG. 13.

At the step 210, the CPU 31 searches equipment data base where classification (kind) is display from the equipment data base placed in the RAM 33. In this example, as shown in FIG. 13, classification (kind) of record recorded first is display. The CPU 31 recognizes that equipment which has network address recorded at the first record is display. Thereafter, the CPU 31 prepares message to the effect that "setting of the system is started" to instruct the display 6 to display it via the network 1 (step 220). Since the display 6 is recognized as equipment which has display means at the previous step, the CPU 31 directly carries out instruction with respect to (equipment which has network address indicating) the display 6. In practical sense, the CPU 31 prepares message to instruct the network interface 35 to transmit it to the display 6. At the display 6, the network interface 75 shown in FIG. 7 receives the message, and that message is read and is decoded by the CPU 71 to instruct the OSD 82 to output the message to allow the display unit 83 to display it.

Then, "front left" is designated by the CPU 31 of the controller 3 (step 230). Namely, message to the effect that "Please push down switch of speaker existing at the position of front left" is prepared, and is displayed on the display 6 via the network 1.

Thereafter, the controller 3 prepares message to instruct "LED flashing/button waiting" to send out that message to all equipments (speakers 5 (5-1 ~ 5-5)) where classification (kind) is monaural (monophonic) speaker from the equipment data base placed in the RAM 33. The equipment which has received this message of "LED flashing/button waiting" carries out flashing of LED (step 231) to wait that the button is pushed down. At the speaker 5, this message arrives at the network interface 55. The CPU 51 decodes this message to instruct the button/LED operation element 58 to carry out flashing of LED. In addition, when it is detected by the button/LED operation element 58 that the button is pushed down, the CPU 51 waits in order to send answer-back to the controller 3.

User pushes down the switch of the speaker 5-1 corresponding to the position of front left from the speakers 5 (5-1 ~ 5-5) where LEDs are flashing. At the speaker 5-1, the button/LED operation element 58 senses that the button has been pushed down to notify (transmit) it to the CPU 51. The CPU 51 prepares message of "pushing down of button" to instruct the network interface 55 to transmit that message to the controller 3. The CPU 31 of the controller 3 waits until message of "pushing down of button" is received (step 232) to turn OFF LED of the speaker 5-1 when that message has been received (step 233).

Thereafter, the CPU 31 reads out message from the network interface 35 to read network address of "pushing down of button" message transmit source to search record where network addresses are in correspondence with each other among records of the equipment data base recorded in the RAM 33, i.e., the second record in the example of FIG. 13 to write attribute of "front left" into the field of the role of corresponding record to make setting (step 234). Finally, the CPU 31 prepares the content of field of role, i.e., in this example, "role message" where attribute of "front left" is described to send that message back to transmit source of "pushing down of button" message via the network 1 (step 235). The transmit source of "pushing down of button" message (speaker 5-1 here) receives "role message" to take out role (attribute of "front left" here) to store it into the RAM 53. Namely, this message arrives at the network interface 55, and the CPU 51 decodes this message to record it into the RAM 53. By operations from the step 230 to the step 235 as described above, the fact that the speaker 5 installed (provided) at the position of "front left" is the speaker 5-1 is recorded with respect to the equipment data base of the controller 3. In addition, the speaker 5-1 recognizes the role that the speaker 5-1 itself has (front left here) to record it into the RAM 53 that the speaker 5-1 itself has.

At times subsequent thereto, in the same manner as stated above, by the operation from step 240 to step 245, speaker 5 installed (provided) at the position of "front right" can be recognized. By the operation from step 250 to step 255, speaker 5 installed (provided) at the position of "center" can be recognized. By the operation from step 260 to step 265, speaker 5 installed (provided) at the position of "rear left" can be recognized. By the operation from step 270 to step 275, speaker 5 installed (provided) at the position of "rear right" can be recognized. Further, the respective speakers 5 (5-2 ~ 5-5) recognize roles that the speakers 5-2 ~ 5-5 themselves have to record them into the RAMs 53 that the speakers 5-2 ~ 5-5 themselves have.

Finally, the CPU 31 of the controller 3 prepares message to the effect that "system setting has been completed" to instruct the display 6 to display it thereon via the network 1 (step 280). By the above-mentioned procedure, correspondence between physical arrangement and addresses on the network 1 can be made. It is to be noted that although explanation is not given here, in the case where plural displays 6 exist, the button/LED operation element 78 that the display 6 has, or the remote control 7 and picture display, etc. may be used to permit setting similar to the above.

Then, explanation will be given in connection with MPEG decoder constituted by decoder 61 of each speaker 5 (5-1 ~ 5-5) and decoder 81 of the display 6.

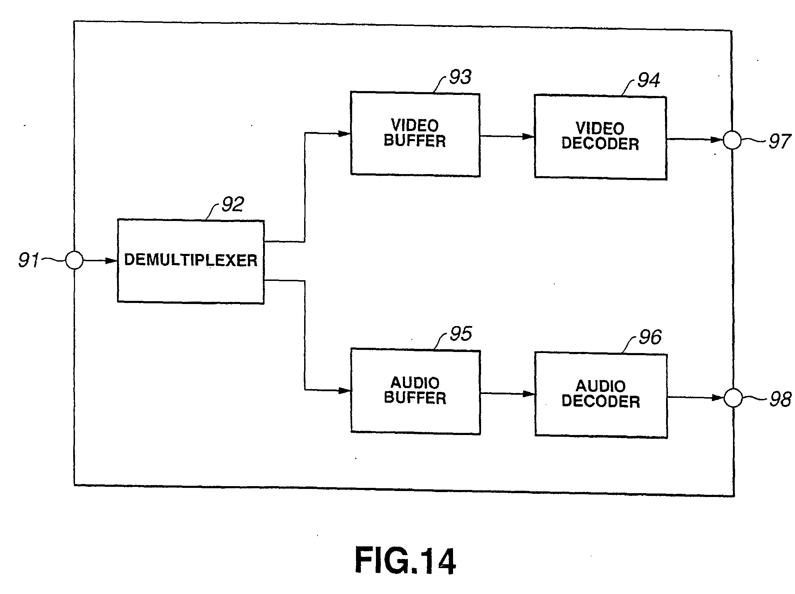

FIG. 14 is a view showing outline of a decoder system in conformity with MPEG 2 system (ISO 13818-1). In the decoder system shown in FIG. 14, stream is inputted from a stream input terminal 91, and is distributed into video stream and audio stream at a demultiplexer 92. The video stream is inputted to a video buffer 93, and is inputted to a video decoder 94 after a predetermined delay time has been passed. The video stream thus inputted is decoded and is outputted from a video output terminal 97. The audio stream is inputted to an audio buffer 95, and is inputted to an audio decoder 96 after a predetermined delay time has been passed. The audio stream thus inputted is decoded, and is outputted from an audio output terminal 98.

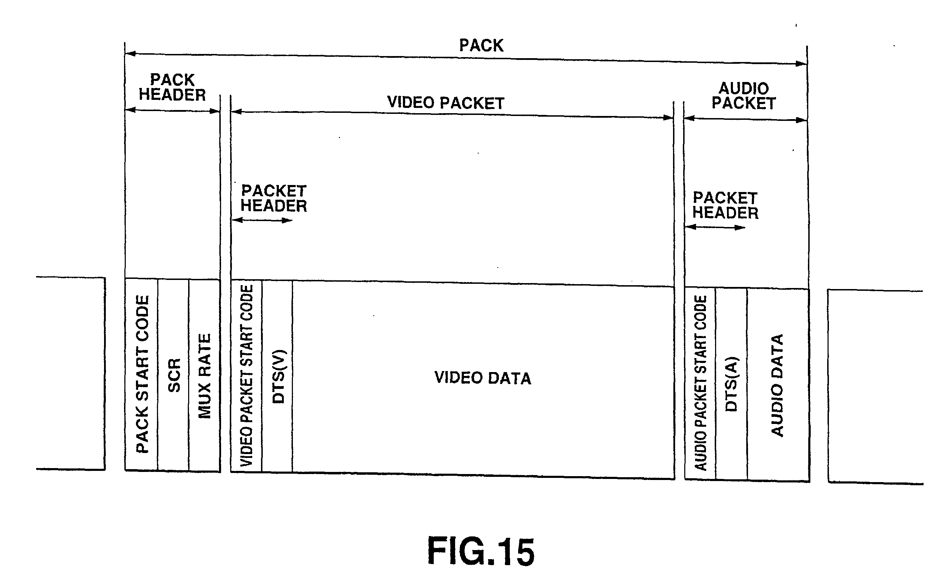

FIG. 15 is a view showing an example of data format delivered to the MPEG decoder. This format is prescribed as multiplex bit stream (Program Stream) of MPEG 2. As shown in FIG. 15, the multiplex bit stream is constituted by one PACK or more, and each pack is constituted by one PACKET or more. At the leading portion of the PACK, PACK HEADER is disposed (assigned). At this PACK HEADER, PACK START CODE indicating starting point of PACK, SCR (System Clock Reference) and MUX RATE are disposed (assigned). SCR indicates time when last byte thereof is inputted to the multiplexer 92. MUX RATE indicates transfer rate.

In the example shown in FIG. 15, VIDEO PACKET and AUDIO PACKET are disposed (assigned) subsequently to PACK HEADER. Also at these PACKETs, PACKET HEADERs are disposed (assigned). At these PACKET HEADERs, VIDEO PACKET START CODE and AUDIO PACKET START CODE indicating starting point of video packet and audio packet, and DTS (V) (PTSV (PTSvideo)) and DTS (A) (PTSA (PTSaudio)) indicating decode (display) starting time of video data and audio data are disposed (assigned). Further, video data and audio data are respectively disposed (assigned) next to these respective PACKET HEADERs. It is to be noted that these timing data such as SCR, and PTS (PTSV or PTSA), etc. are represented by count value of clock consisting of frequency of 90 kHz, and have significant digit of 33 bits. Further, since simplified modelling for system representation is carried out, time required for decode operation becomes equal to 0 (zero). For this reason, decode starting time and display starting time are equal to each other.

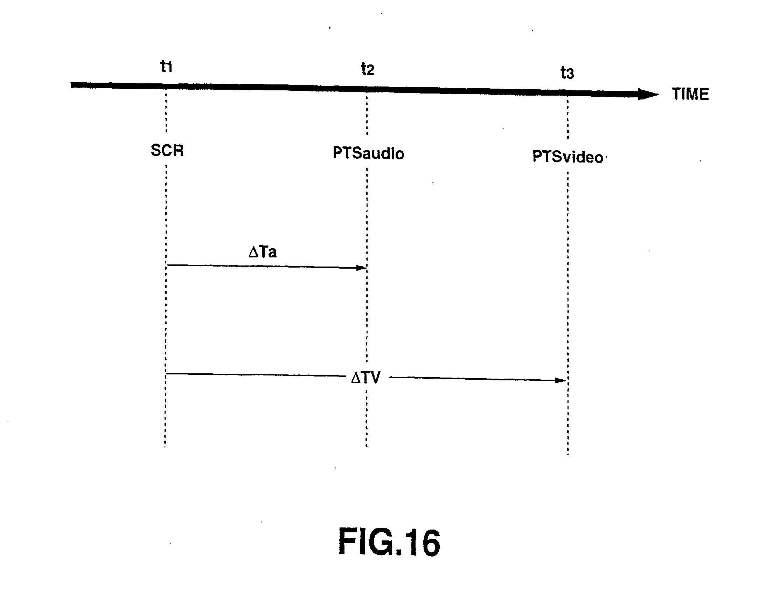

FIG. 16 is a view showing the relationship between SCR and PTSV (PTSvideo) and the relationship between SCR and PTSA (PTSaudio). The time when PACK HEADER is passed through the demultiplexer 92 is t1, and display times for video data and audio data included in corresponding PACK are respectively t2 and t3. Here, time from SCR to PTSaudio is assumed to be $\Delta$Ta, and time from SCR to PTSvideo is assumed to be $\Delta$Tv. $\Delta$Ta and $\Delta$Tv are arbitrary times determined at the time of encode operation. The time when corresponding PACK is inputted to the demultiplexer 92 is SCR, and decode (display) starting times of video data and audio data included in corresponding PACK are later than SCR because those data are respectively delayed by predetermined times at the video buffer 93 and the audio buffer 95. In addition, since delay at the video buffer 93 is generally greater than delay at the audio buffer 95, even in the case where PACK HEADER is passed through the demultiplexer 92 at the same timing, decode (display) time of video data is later than decode (display) time of audio data. It is to be noted that since time required for decode operation is 0 (zero) as previously described, delays here respectively take place at the video buffer 93 and the audio buffer 95.

Then, explanation will be given in connection with way of thinking of delay compensation in the present invention.

The controller 3 sets $\Delta$t in carrying out reproduction of contents to notify it to the contents source 4. The contents source 4 sets time at which output of contents should be carried out at time delayed by $\Delta$t with respect to transmit time of contents data to send out contents data. The group of sync equipments of contents (speakers 5 (5-1 ~ 5-5), display 6) output received contents data at designated time.

$\Delta$t is value obtained by adding time which becomes maximum among network delays (communication delays) when contents data is sent from the contents source 4 to the group of sync equipments of contents (speakers 5 (5-1 ~ 5-5), display 6) and time which becomes maximum among actual decode delays of the group of sync equipments of contents (speakers 5 (5-1 ~ 5-5), display 6). When occasion demands, there are cases where some margin is added for the purpose of increasing margin. Moreover, there are also cases where delay by factor except for these two delay times is added. For example, delay, etc. of router in the case of straddling subnet is conceivable.

Further, there are instances where value of $\Delta$t is changed by combination of the group of sync equipments. Namely, when combination of the group of sync equipments of contents is changed, there is the possibility that the maximum delay and the maximum decode delay among them may be changed. There are conceivable two methods of the case where $\Delta$t is varied every time by combination of the group of sync equipments and the case where the maximum network delay and the maximum decode delay which can take place within the system are used, i.e., the maximum value of $\Delta$t is estimated to use it.

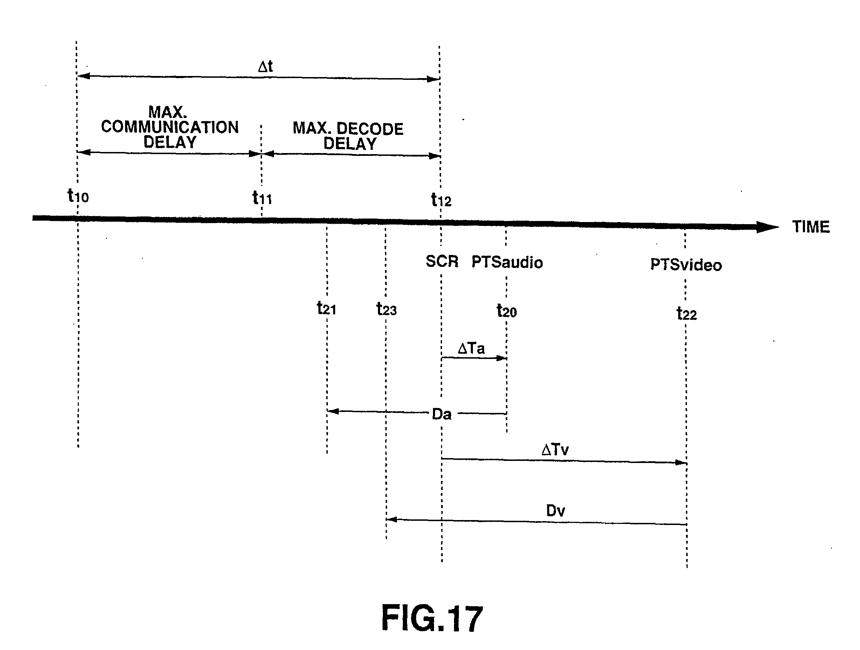

FIG. 17 is a view for explaining delay in this embodiment. The time when the contents source 4 starts transmission with respect to the stream leading portion is assumed to be t10. A time obtained by adding the maximum communication delay (network delay) to the t10 is assumed to be t11. Contents data transmitted from the contents source 4 arrives at the group of sync equipments of all contents (speakers 5 (5-1 ~ 5-5), display 6)) by t11 at the latest. Namely, in regard to delay of communication, reproduction time is delayed by the maximum communication delay from delivery or distribution time so that compensation can be made.

Then, time in which the maximum decode delay is added to t11, i.e., time in which $\Delta$t is added to t10 is assumed to be t12. In the case of multiplex stream of the MPEG system, decode start becomes processing start of bit stream, i.e., demultiplex start. For this reason, the time t12 becomes time to which SCR of corresponding bit stream corresponds. When numeric values shown in FIG. 16 are applied to carry out consideration, output staut time of audio data PTSaudio becomes t20 in which $\Delta$Ta is added to t12, and output start time PTSvideo of video data becomes time t22 in which $\Delta$Tv is added to t12.

Here, actual decode delay will be considered. When decode delay of the decoder 81 of the display 6 is assumed to be Dv and decode delay ofthe decoder 61 ofthe speaker 5 is assumed to be Da, it is necessary for outputting audio data at t20 to start decode operation of audio data at time t21 retroactive by Da from t20. Moreover, similarly to the above, it is necessary for outputting video data at t22 to start decode operation of video data at time t23 retroactive by Dv from t22.

At this time, when $\Delta$Ta or $\Delta$Tv is assumed to be given as extremely small value, t20 or t22 infinitely becomes close to t12. Accordingly, t21 or t23 becomes time retroactive by the decode delay from t12. For this reason, it is sufficient that time retroactive by the maximum decode delay from t12 is after t11. When repeating operation is made, if decode start waits until t11, delay by network can be disregarded. Further, apparent decode start time (t12, SCR) is delayed by the maximum delay time in actual decode delay from t11, thereby also making it possible to disregard influence of decode delay. For this reason, the maximum decode delay is added to $\Delta$t.

Then, stream reproduction operation will be explained.

Consideration will be made in connection with the case where user gives designation of reproduction mode to the controller 3 by using the remote control 7 in FIG. 1. Here, it is assumed that surround reproduction using the display 6 and the speakers 5 (5-1 ~ 5-5) is designated. At this time, a remote control signal is received at the remote control light receiving unit 36 of the controller 3. The remote control light receiving unit 36 transmits command of reproduction mode designation to the CPU 31. The CPU 31 makes reference to equipment data base recorded in the RAM 33 to select the maximum value of decode delay from the sync equipments (speakers 5 (5-1 ~ 5-5), display 6) to further read out delay of network determined in advance from the ROM 32 to add both values to allow the added value to be $\Delta t$.

Here, consideration will be made in connection with the case where user gives instruction of contents reproduction to the controller 3 by using the remote control 7. This remote control signal is received at the remote control light receiving unit 36 of the controller 3. The remote control light receiving unit 36 transmits command of contents reproduction to the CPU 31. The CPU 31 makes reference to equipment data base recorded in the RAM 33 to search contents source. Here, contents source 4 is found out to obtain network address. The controller 3 sends out message of "contents reproduction start" to the contents source 4. At this time, value of $\Delta t$ is also simultaneously given. In addition, in the ordinary state, here, designation of contents is carried out.

Namely, the CPU 31 prepares "contents reproduction start message" to designate $\Delta t$ therein. Further, the CPU 31 instructs the network interface 35 to transmit "contents reproduction start message" to the contents source 4. This "contents reproduction start message" is comprised of a predetermined character string.

The controller 3 instructs the group of sync equipments (speakers 5 (5-1 ~ 5-5), display 6) of this time to reproduce contents data from the contents source 4. Namely, the CPU 31 prepares "contents source designation message" to designate network address of the contents source 4 therein. The CPU 31 instructs the network interface 35 to transmit "contents source designation message" in order one by one to the group of sync equipments (speakers 5 (5-1 ~ 5-5), display 6) of this time. This "contents source designation message" is comprised of a predetermined character string.

At the same time, the controller 3 sets volume with respect to the group of speakers 5 (speakers 5-1 ~ 5-5) among the group of sync equipments of this time. Namely, the CPU 31 prepares "volume setmessage" to designate value of volume therein. The CPU 31 instructs the network interface 35 to transmit "volume set message" in order one by one to the speakers 5 (5-1 ~ 5-5) which are designated sync equipments among the group of sync equipments. This 'volume set message" is comprised of a predetermined character string.

Then, the operation of the contents source 4 will be explained: The contents source 4 receives "contents reproduction start message". Namely, message arrives at the network interface 45, and the CPU 41 decodes this message to receive value of $\Delta t$ and to start reproduction of contents. First, the CPU 41 instructs the hard disk unit 48 to output predetermined contents.

Stream outputted from the hard disk unit 48 is analyzed at the bit stream analyzer 49. Thus, value of the leading SCR is read out. Numeric value of SCR is read out by the CPU 41, and stream proceeds to the buffer 50 as it is.

At this time, it is assumed that time information 'Tt' at the contents source 4 is 'T10', and value of SCR of the stream leading portion is 'S10'. Namely, time 'T12' at which time stamp having value of 'S10' of bit stream is processed by demultiplexer (not shown) within the decoder 61 at the speaker 5, or demultiplexer (not shown) within the decoder 81 of the display 6 becomes equal to the time in which '$\Delta t$' given by the controller 3 is added to current time 'T10'

$$T12 = T10 + \Delta t$$

The CPU 41 of the contents source 4 prepares "time stamp offset message" to designate value of 'S10' and value of 'T12'. The CPU 41 instructs the network interface 45 to broadcast "time stamp offset message" to the network 1. Thus, all sync equipments recognize the relationship between time stamp of MPEG2 and 'clock'.

The CPU 41 of the contents source 4 instructs the network interface 45 to broadcast the content (stream) of the buffer 50 to the network 1. While broadcasting operation is carried out with respect to the network 1 here, there may be also employed unicast (one-to-one communication). In this instance, the controller 3 is required to transmit list of sync equipments to the contents source 4, and the contents source 4 transmits data in accordance with that list data.

Then, the operation of the speaker 5 in the present invention will be explained. The CPU 51 of the speaker 5 receives message of "contents source designation message" that the controller 3 has transmitted. The CPU 51 stores network address designated as contents source into the RAM 53. The speaker 5 waits for contents data from the contents source 4 by instruction of the controller 3. By this mechanism, plural combinations between contents source and sync equipments can exist on the same network.

Moreover, the CPU 51 of the speaker 5 receives message of "volume set message" that the controller 3 has transmitted. The CPU 51 sets volume with respect to the amplifier 62. Further, the speaker 5 receives "time stamp offset message" that the contents source 4 has transmitted. This "time stamp offset message" is set in a manner accompanied with contents data. Since the speaker 5 is waiting for contents data from the contents source 4 in advance, this message has been accepted or received. From this "time stamp offset message", the relationship between time stamp of MPEG and time information can be understood. The CPU 51 of the speaker 5 calculates

difference offset value = S10 - T12.

Thus, offset value is added to time information 'Tt' at the speaker 5, thereby making it possible to calculate value of STC (System Time Clock) which is clock device of MPEG. In addition, offset is subtracted from time stamp of MPEG system, thereby making it possible to determine value of time information 'Tt'.

The speaker 5 receives stream that the contents source 4 has transmitted to input it to the buffer 59. The stream which has been inputted to the buffer 59 is inputted to the decoder 61 via the time stamp extractor 60. The CPU 51 reads out SCR and PTSaudio from the time stamp extractor 60. Moreover, the CPU 51 recognizes value of decode delay Da. Since there exists decode delay in the decoder 61, it is necessary to start decode operation in a manner retroactive (at time earlier) by Da from the ostensible output start time. To carry out this adjustment, the CPU 51 of the speaker 5 carries out the following processing.

First, time retroactive by Da from T12 is assumed to be T11 (actual demultiplex start time). The first PTSaudio (ostensible audio decode/display start) of stream is assumed to be T20, and time retroactive by Da from T20 is assumed to be T21. Namely, T12 is ostensible demultiplex start time, and T11 becomes actual demultiplex start time advanced in point of time by decode delay. Moreover, T20 is ostensible decode (display) start time in the first PTSaudio of stream, and T21 becomes actual decode start time advanced in point of time by decode delay. The CPU 51 reads out time information 'Tt' reproduced from the counter 57 to start demultiplex operation at the time point when time becomes equal to T11. Subsequently, at the time point when time becomes equal to T21, decode operation is started. Thus, output of audio data can be started at T20.

Then, the operation of the display 6 constituting the present invention will be explained. The CPU 71 of the display 6 receives message of "contents source designation message" that the controller 3 has transmitted. The CPU 71 stores network address designated as contents source into the RAM 73. The display 6 waits for contents data from the contents source 4 by instruction of the controller 3. By this mechanism, there can exist plural combinations of contents source and sync equipments on the same network.

The display 6 receives "time stamp offset message" that the contents source 4 has transmitted. This "time stamp offset message" is message sent in a manner accompanied with contents data. Since the display 6 waits in advance contents data from the contents source 4, this message has been accepted or received. From this "time stamp offset message", the relationship between time stamp of MPEG and time information can be understood. The CPU 71 of the display 6 calculates

difference offset value = S10 - T12.

Thus, offset value is added to time information 'Tt' at the display, thereby making it possible to calculate value of STC (System Time Clock) which is clock device of MPEG. In addition, offset is subtracted from time stamp of MPEG system, thereby making it possible to determine value of time information 'Tt'.

The display 6 receives stream that the contents source 4 has transmitted to input it to the buffer 79. The stream inputted to the buffer 79 is inputted to the decoder 81 via the time stamp extractor 80. The CPU 71 reads out SCR and PTS video from the time stamp extractor 80. Moreover, the CPU 71 recognizes value of decode delay Dv. Since there exists decode delay in the decoder 81, it is necessary to start decode operation in a manner retroactive (at time earlier) by Dv from the ostensible output start time. To carry out this adjustment, the CPU 71 of the display 6 carries out the following processing.

First, time retroactive by Dv from T12 is assumed to be T11 (actual demultiplex start time). The first PTSvideo (ostensible video decode/display start) of stream is assumed to be T22, and time retroactive by Dv from T22 is assumed to be T23. Namely, T12 is the ostensible demultiplex start time, and T11 becomes actual demultiplex start time advanced in point of time by decode delay. In addition, T22 is the ostensible decode (display) start time in the first PTSvideo of stream, and T23 becomes actual decode start time advanced in point of time by decode delay. The CPU 71 reads out time information 'Tt' reproduced from the counter 77 to start demultiplex operation at the time point when time becomes equal to T11. Subsequently, at the time point when time becomes equal to T23, decode operation is started. Thus, it is possible to start output of video data at T22.

Finally, a method for position compensation will be described.

While two delays of delay by network and decode delay have been considered as element of Δt in the above-mentioned example, delay adjustment by the position of the speakers 5 (5-1 ~ 5-5) is conceivable in addition to the above. For example, it is assumed that the speaker 5-4 is near with respect to the listening position 8 as compared to the speaker 5-5 by 1.7 meters. Since sound velocity is about 340 meters/sec., it takes about 5 milli-sec. for advancement of distance of 1.7 meters. Namely, with respect to sounds sent simultaneously at the speaker 5-4 and the speaker 5-5, sound from the speaker 5-4 arrives at the listening position 8 in a manner early by 5 mili sec. In order to compensate this, there is a method of adding delay of 5 milli-sec. to the speaker 5-4. In other words, in the case where only the speaker 5-4 is near with respect to the listening position 8 by 1.7 meters, output is provided early by 5 milli-sec. with respect to speakers except for the speaker 5-4.

The present invention can also cope with such method. In practical sense, in calculating Δt in the above-mentioned example, "maximum value of position compensation delay" is added in addition to "maximum value of network delay" and "maximum value of decode delay". Namely, Δt becomes great by 5 milli-sec. as compared to the above-mentioned example. Moreover, the controller 3 instructs delay of 0 milli-sec. with respect to the speaker 5-4, and instructs lead (advancement in point of time) of 5 milli-sec. with respect to speakers except for the speaker 5-4. At this time, it is possible to receive instruction of delay every sync equipment on the basis of network address designated by "contents source designation message" transmitted from the controller 3. In addition, there may be also employed a configuration such that "phase compensation delay set messages" of respective speakers 5 are prepared by the CPU 31 of the controller 3 and are sent to the respective speakers 5 so that delays are instructed every sync equipments.

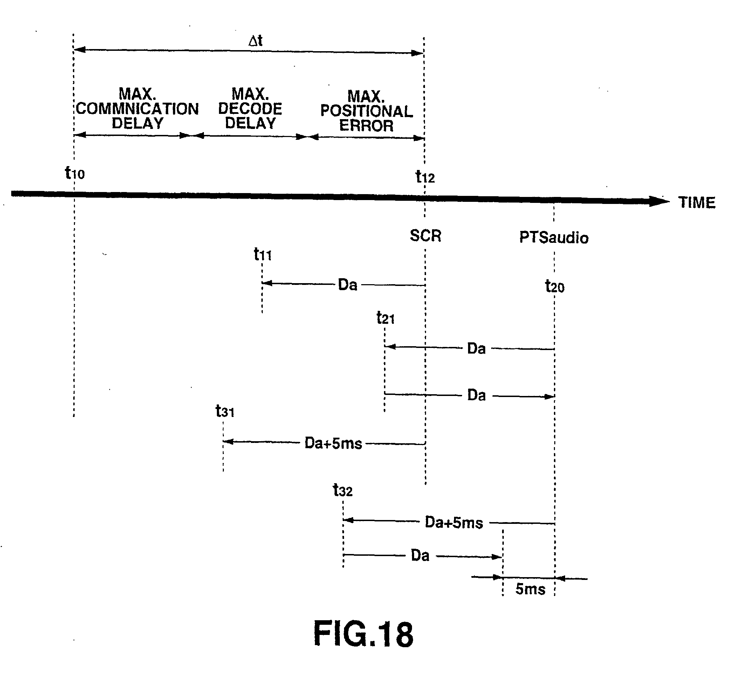

FIG. 18 is a view for explaining delay in the case where the maximum value of position compensation delay is taken into consideration. The contents source 4 adds Δt to sending-out time t10 of contents to designate t12 as ostensible demultiplex start time. At the speaker 5-4 of rear left, demultiplex operation is started at time t11 retroactive by "decode delay Da + 0 mili sec." from t12 corresponding to the first SCR, and decode operation is started at time t21 retroactive by "decode delay Da + 0 mili sec." from t20 corresponding to the first PTSaudio. Thus, audio output can be provided at t20.

At speakers 5 except for the speaker 5-4, demultiplex operation is started at time t31 retroactive by "decode delay Da + 5 mili sec." from t12 corresponding to the first SCR, and decode operation is started at time t32 retroactive by "decode delay Da + 5 milli-sec." from t20 corresponding to the first PTSaudio. Thus, audio output can be provided at time early by 5 milli-sec. from t20. Namely, by these operations, outputs from speakers 5 except for the speaker 5-4 can be provided early by 5 mili sec. as compared to output from the speaker 5-4. In this way, compensation of speaker position can be made.

As described above in detail, in this embodiment, first, countermeasure is implemented with respect to the relationship (connection) between operating clocks in the source equipment and sync equipment. Namely, in the case where clocks of both equipments are asynchronous, since data processing speeds of the both equipments, i.e., processing times with respect to the same number of samples are different, underflow or overflow would take place at buffer existing between two equipments as the result thereof. In this embodiment, there is employed the configuration to carry out delivery or distribution of clock, whereby in the case where difference between received reference time signal and internal time information is great, the received reference time signal is substituted into internal time counter, and when the internal time information leads, clock is caused to be slow, while when the internal time information lags, clock is caused to be fast. Thus, it becomes possible to take synchronization of clocks at equipments connected to network.

Further, with respect to the relationship of phase (timing) between plural input/output equipments connected to network, since transmission delay is not fixed in the network, there is no guarantee that output is provided at a sufficiently small phase error. Furthermore, absolute value of delay becomes great as compared to the analog connection. However, in accordance with this embodiment, as stated above, the same clock devices are first operated at respective equipments to designate input/output timings by times of those clock devices to thereby phase information (input/output time/timing) delivery or distribution. In addition, there is employed the configuration to correct delay taking place in reproduction of contents in consideration of network (communication) delay and decode delay at terminal equipment. Thus, phase matching is carried out in ideal state thereafter to have ability to carry out actual phase adjustment.

In the conversion delay represented by the above-described decode delay used in the present invention, there may be included various delays, e.g., delay through sampling frequency conversion, noise filter or surround function, etc.

While the output equipment provided with decoder adapted for reproducing stream to output it has been mainly explained in the present invention, the present invention may be also applied to the form or mode where various input equipments such as digital camera, microphone, or switch which carries out remote control operation, etc. are connected to network. In the case of such mode or form, synchronization of phase can be realized in consideration of encode delay taking place in carrying out encode operation to generate stream.

Industrial Applicability

As explained above, in accordance with the present invention, it becomes possible to take synchronization between respective equipments connected to network.

**Claims**

1. A network system in which plural equipments are connected to network, the network system comprising:

   clock delivery or distribution means for delivering or distributing clocks and for delivering or distributing time information to the plural equipments;

clock adjustment means for adjusting clocks at respective equipments on the basis of the clocks and the time information which have been delivered or distributed by the clock delivery or distribution means; and
delay correction means for implementing delay correction to the plural equipments in consideration of network delay taking place when communication of stream is carried out on the network.

2. The network system as set forth in claim 1, wherein the delay correction means implements delay correction in consideration of conversion delay taking place when the plural equipments carry out conversion relating to the stream.

3. The network system as set forth in claim 1, wherein the delay correction means includes delay correction taking place in dependency upon the position where the equipment is placed.

4. A network system comprising:

a clock source for transmitting clock to a group of sync equipments connected to network;
a contents source for offering contents through the network to the group of sync equipments connected to the network; and
a controller for offering, to the contents source, delay time based on network delay when contents data is sent to the group of sync equipments and decode delay in the group of sync equipments in reproducing the contents.

5. The network system as set forth in claim 4, wherein the clock source transmits time information to the group of sync equipments every predetermined time.

6. The network system as set forth in claim 4, wherein the contents source prepares delay information message based on the delay time which has been offered from the controller to deliver or distribute the delay information message to the group of sync equipments in a manner accompanied with the contents data.

7. An output equipment connected to network and serving to decode contents data offered through the network, the output equipment comprising:

clock reproducing means for reproducing clock on the basis of a reference time signal which has been received through the network; and
stream reproducing means for implementing necessary delay to the contents data which has been received through the network to decode the contents data thus obtained to output.

8. The output equipment as set forth in claim 7, which further comprises clock oscillating means which oscillates clock used therein, wherein the clock reproducing means compares the received reference time signal and value of output from the clock oscillating means to adjust oscillating frequency of the clock oscillating means to thereby reproduce the clock.

9. The output equipment as set forth in claim 7, wherein the stream reproducing means starts decode operation in consideration of own decode delay time from time information from which the contents data received in a manner accompanied with the contents data should be outputted.

10. A synchronization method for a network system for taking synchronization of input or output by plural equipments connected to network, the synchronization method for network system, comprising:

delivering or distributing time information to the plural equipments along with clock;
operating a common clock device by the plural equipments on the basis of the clock and the time information which are delivered or distributed;
using, for the plural equipments, input timing or output timing using time of the clock device in consideration of network delay and conversion delays at the plural equipments; and
starting conversions at the respective equipments on the basis of the input timing or the output timing which has been used and conversion delays at the respective equipments.

11. The synchronization method for network system as set forth in claim 10, wherein the input timing or the output timing is determined by adding the maximum time of the conversion delays at the plural equipments to the maximum time of the network delay.

12. A synchronization method for a network system for taking synchronization of output by plural equipments connected to network, the synchronization method for network system, comprising:

receiving time information through the network along with clock;
adjusting clock on the basis of the clock and the time information which have been received;
receiving information indicating time at which reproduction of the contents data is started along with contents data;
determining start timing of decode operation on the basis of delay taking place in decoding the contents data on the basis of the received information; and

starting decode operation by the determined start timing to reproduce the contents data.

13. The synchronization method for network system as set forth in claim 12, the method comprising the steps of:

receiving designation of network address as contents source through the network; and determining the start timing on the basis of instruction of delay carried out with respect to the network address.

**FIG.1**

EP 1 320 213 A1

FIG.2

EP 1 320 213 A1

FIG.3

EP 1 320 213 A1

_3_

_31_

CPU

_34_

ROM

_32_

RAM

_33_

NETWORK
INTERFACE

_35_

_1_

REMOTE CONTROL
LIGHT RECEIVING
UNIT

_36_

**FIG.4**

**FIG.5**

EP 1 320 213 A1

5 (5-1~5-5)

| 59 | 60 | 61 | 62 | 63 |

| BUFFER | TIME STAMP EXTRACTOR | DECODER | AMPLIFIER | SPEAKER |

51

CPU

54

ROM

RAM

55

NETWORK INTERFACE

52

53

1

CLOCK OSCILLATOR

COUNTER

56

57

BUTTON/LED OPERATION ELEMENT

58

**FIG.6**

FIG.7

EP 1 320 213 A1

**FIG.8**

START

READ-OUT OF REFERENCE
TIME SIGNAL 'Ts' — *S101*

READ-OUT OF TIME
INFORMATION 'Tt' — *S102*

CALCULATION OF DIFFERENCE
(diff=Ts−Tt) — *S103*

*S104*
$|diff| > k$ ?

YES → SUBSTITUTION OF Ts INTO COUNTER — *S105*

NO

*S106*
$diff = 0$ ? — YES

NO

*S107*
$diff > 0$ ? — YES

NO

CLOCK IS CAUSED
TO BE SLOW — *S108*

CLOCK IS CAUSED
TO BE FAST — *S109*

END

# FIG.9

24

START

CONFIRMATION AS TO WHETHER
OR NOT CONNECTION TO
NETWORK IS MADE *S201*

CONNECTION MADE
? *S202*

NO

YES

TRANSMISSION OF
RESPONSE REQUEST *S203*

MASSAGE RECEIVED
? *S204*

NO

YES

READ-OUT *S205*

RESPONSE ? *S206*

YES

NO

STORAGE INTO
INTERNAL MEMORY *S207*

PREDETERMINED
TIME PASSED
? *S208*

NO

YES

①

# FIG.10

(1)

SEARCH OF DISPLAY FROM DATA BASE —S210

DISPLAY OF MESSAGE TO THE EFFECT THAT "SETTING OF SYSTEM IS STARTED" —S220

FRONT LEFT

"FRONT LEFT" DESIGNATION —S230

FLASHING OF LED OF SPEAKER —S231

S232 — MASSAGE RECEIVED ? — NO

YES

TURNING OFF OF LED OF SPEAKER —S233

SETTING —S234

SENDING BACK OF "ROLE" —S235

S240~S245 FRONT RIGHT

S250~S255 CENTER

S260~S265 REAR LEFT

S270~S275 REAR RIGHT

DISPLAY OF "SETTING COMPLETION" MASSAGE —S280

END

FIG.11

| NO. OF ENTRIES | | N |
|---|---|---|
| 1-ST | NETWORK ADDRESS | xxx.xxx.xxx.xxx |
| | CLASSIFICATION | DISPLAY |
| | ROLE | - - |
| | DECODE DELAY | xx.x |
| 2-ND | NETWORK ADDRESS | xxx.xxx.xxx.xxx |
| | CLASSIFICATION | MONAURAL SPEAKER |
| | ROLE | - - |
| | DECODE DELAY | xx.x |
| 3-RD | NETWORK ADDRESS | xxx.xxx.xxx.xxx |
| | CLASSIFICATION | MONAURAL SPEAKER |
| | ROLE | - - |
| | DECODE DELAY | xx.x |

# FIG.12

EP 1 320 213 A1

| NO. OF ENTRIES | 7 |
|---|---|

| NETWORK ADDRESS | CLASSIFICATION | ROLE | DECODE DELAY | (REFERENCE) |
|---|---|---|---|---|
| xxx.xxx.xxx.xxx | DISPLAY | - - | | (DISPLAY 6) |
| xxx.xxx.xxx.xxx | MONAURAL SPEAKER | - - | | (SPEAKER 5-1) |
| xxx.xxx.xxx.xxx | MONAURAL SPEAKER | - - | | (SPEAKER 5-2) |
| xxx.xxx.xxx.xxx | MONAURAL SPEAKER | - - | | (SPEAKER 5-3) |
| xxx.xxx.xxx.xxx | MONAURAL SPEAKER | - - | | (SPEAKER 5-4) |
| xxx.xxx.xxx.xxx | MONAURAL SPEAKER | - - | | (SPEAKER 5-5) |
| xxx.xxx.xxx.xxx | CONTENTS SOURCE | - - | | (CONTENTS SOURCE 4) |

# FIG.13

EP 1 320 213 A1

EP 1 320 213 A1

**FIG.14**

FIG.15

FIG.16

EP 1 320 213 A1

FIG.17

FIG.18

EP 1 320 213 A1

<div align="center">

**INTERNATIONAL SEARCH REPORT**

</div>

| | International application No. |
|---|---|
| | PCT/JP02/07169 |

**A. CLASSIFICATION OF SUBJECT MATTER**
Int.Cl⁷ H04L7/00, H04L12/28, G06F1/04, G06F13/00

According to International Patent Classification (IPC) or to both national classification and IPC

**B. FIELDS SEARCHED**

Minimum documentation searched (classification system followed by classification symbols)
Int.Cl⁷ H04L7/00, H04L12/28, G06F1/04, G06F13/00

Documentation searched other than minimum documentation to the extent that such documents are included in the fields searched

| Jitsuyo Shinan Koho | 1926–1996 | Jitsuyo Shinan Toroku Koho | 1996–2002 |
| Kokai Jitsuyo Shinan Koho | 1971–2002 | Toroku Jitsuyo Shinan Koho | 1994–2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2001-28537 A (Victor Company Of Japan, Ltd.),<br>30 January, 2001 (30.01.01),<br>Column 3, line 29 to column 4, line 25;<br>Figs. 1 to 3 and explanation thereof<br>(Family: none) | 1-3,7-10,12<br>4-6,11,13 |
| Y<br>A | JP 8-212701 A (Sanyo Electric Co., Ltd.),<br>20 August, 1996 (20.08.96),<br>Column 15, line 41 to column 24, line 35<br>& EP 668700 A2 & US 5668601 A | 1,2,7-10,12<br>3-6,11,13 |
| Y | JP 2000-59898 A (Matsushita Electric Industrial<br>Co., Ltd.),<br>25 February, 2000 (25.02.00),<br>Column 2, line 29 to column 3, line 28<br>(Family: none) | 3 |

☒ Further documents are listed in the continuation of Box C.  ☐ See patent family annex.

| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
|---|---|
| Date of the actual completion of the international search<br>11 October, 2002 (11.10.02) | Date of mailing of the international search report<br>29 October, 2002 (29.10.02) |
| Name and mailing address of the ISA/<br>Japanese Patent Office | Authorized officer |
| Facsimile No. | Telephone No. |

Form PCT/ISA/210 (second sheet) (July 1998)

**EP 1 320 213 A1**

## INTERNATIONAL SEARCH REPORT

| International application No. |
| --- |
| PCT/JP02/07169 |

C (Continuation).  DOCUMENTS CONSIDERED TO BE RELEVANT

| Category* | Citation of document, with indication, where appropriate, of the relevant passages | Relevant to claim No. |
| --- | --- | --- |
| E,A | JP 2001-352316 A  (NTT Docomo Inc.),<br>21 December, 2001 (21.12.01),<br>Full text<br>& EP 1143671 A2          & US 2002/0009054 A1 | 1-13 |
| A | JP 2000-278275 A  (Yamaha Corp.),<br>06 October, 2000 (06.10.00),<br>Full text<br>(Family: none) | 1-13 |
| A | JP 2001-54200 A  (Mitsubishi Electric Information Technology Center America, Inc.),<br>23 February, 2001 (23.02.01),<br>Full text<br>(Family: none) | 3 |

Form PCT/ISA/210 (continuation of second sheet) (July 1998)